# EUROPÄISCHE PATENTSCHRIFT

(11) **EP 4 547 497 B1**
(45) Veröffentlichungstag und Bekanntmachung des Hinweises auf die Patenterteilung: **15.04.2026**
(21) Anmeldenummer: 23730443.1
(22) Anmeldetag: 01.06.2023
(51) Int. Cl.: B60B 17/00

(54) **MEHRTEILIGES SCHIENENRAD UND RADSATZ FÜR EIN SCHIENENFAHRZEUG, INSBESONDERE NIEDERFLUR SCHIENEN-FAHRZEUG**
MULTI-PART RAIL WHEEL AND WHEEL SET FOR A RAIL VEHICLE, IN PARTICULAR A LOW-FLOOR RAIL VEHICLE
ROUE FERROVIAIRE À PLUSIEURS PARTIES ET ESSIEUX MONTÉS POUR UN VÉHICULE FERROVIAIRE, EN PARTICULIER UN VÉHICULE FERROVIAIRE À PLANCHER SURBAISSÉ

(30) Priorität: 28.06.2022 DE 102022116085
(43) Veröffentlichungstag der Anmeldung: 07.05.2025
(73) Patentinhaber: Bochumer Verein Verkehrstechnik GmbH, 44793 Bochum (DE)
(72) Erfinder: MURAWA, Franz, 44805 Bochum (DE)
(74) Vertreter: Cohausz & Florack
(86) Internationale Anmeldenummer: PCT/EP2023/064628
(87) Internationale Veröffentlichungsnummer: WO 2024/002611

(56) Entgegenhaltungen:
- WO-A1-2018/046745
- CN-A- 105 270 428
- DE-A1- 2 637 980
- DE-U1- 202019 103 993
- FR-A5- 2 109 708
- GB-A- 718 013
- JP-A- 2006 226 267
- JP-A- H07 311 499

## Beschreibung

Die Erfindung betrifft ein mehrteiliges Schienenrad mit einem Radreifen, mit einem aus einem Leichtmetallwerkstoff bestehenden Radkörper, der eine Nabenöffnung aufweist, in der eine Anlagefläche vorgesehen ist, an der im Gebrauch ein Außenring eines Wälzlagers abgestützt ist oder die im Gebrauch mit der Außenfläche einer Welle oder eines Wellenstummels verbunden ist, und mit mindestens einem zwischen dem Radreifen und dem Radkörper angeordneten elastischen Körper, über den der Radreifen elastisch an dem Radkörper abgestützt ist.

Derartige aus mehreren Bauteilen zusammengesetzte Schienenräder werden in der Fachsprache auch als "Hybrid-Schienenräder" bezeichnet und insbesondere an so genannten "invertierten Portalachsen" für Niederflurfahrzeuge, wie Straßen- oder Stadtbahnen, eingesetzt. Beispiele für solche Schienenräder sind auf der Homepage der Anmelderin unter der URL https://www.bochumer-verein.de/das-superleichte-bvv-hybridrad-mit-aluminiumfelge-zweilteilig/ und unter der URL https://www.bochumer-verein.de/dassuperleichte-bvv-hybridrad-mit-aluminium-felge-dreiteilig/, Auffindedatum jeweils 17.11.2021, dargestellt und beispielsweise in der WO 2018/046745 A1 im Einzelnen beschrieben.

Ebenso betrifft die Erfindung einen mit solchen Schienenrädern ausgestatteten Radsatz für ein Schienenfahrzeug, beispielsweise für ein Niederflur-Schienenfahrzeug.

Beispiele für mit Schienenrädern der hier vorgestellten Art in Loslagerung bestückte Radsätze für Niederflurfahrzeuge sind unter der URL https://www.bochumer-verein.de/die-bvv-niederflur-radsaetze-mitlosradlagerung/, Auffindedatum 9. November 2021, dargestellt.

Bei Losrädern von Niederflurradsätzen ergeben sich aufgrund der Loslagerung spezielle Anforderungen an die Gestaltung der Öffnung der Nabe, die die Radlagerung aufnimmt. Dabei können an dem jeweiligen Schienenrad ergänzend eine Bremsscheibe, auf die eine am jeweiligen Fahrzeug gehaltene Bremseinrichtung wirkt, befestigt sein oder das betreffende Rad ist mit einem Antrieb verkoppelt, um im Fahrbetrieb Antriebsenergie direkt auf das Rad zu übertragen. Diese Befestigung einer Bremsscheibe oder von für die Ankopplung an den Antrieb benötigten Bauteilen stellt bei einem Hybridschienenrad, bei dem der Radkörper aus einem Leichtmetallwerkstoff, insbesondere aus einem Aluminiumwerkstoff gefertigt ist, aufgrund der deutlich geringeren Ermüdungsfestigkeitseigenschaften der eingesetzten Werkstoffe in der Praxis ein erhebliches Problem dar.

Schienenräder der hier beschriebenen Art können aber nicht nur bei Niederflurradsätzen, sondern auch bei konventionellen Radsätzen oder auch bei Sonderkonstruktionen wie Einzelradaufhängungen eingesetzt werden.

Sämtliche der im vorliegenden Text angegebenen mechanischen Eigenschaften der zur Herstellung von erfindungsgemäßen Schienenrädern verwendbaren Werkstoffe sind, soweit nicht anders angegeben, in Anlehnung an DIN EN 13262 sowie der FKM-Richtlinie "Rechnerischer Festigkeitsnachweis von Maschinenbauteilen" bestimmt worden.

Im Regelfall werden die Radkörper von gummigefederten Schienenrädern aus hochfesten Stahllegierungen wie z.B. 42CrMo4, 34CrNiMo6 oder 30 CrNiMo8 gemäß DIN EN ISO 683 hergestellt, welche bei den üblichen Rauigkeiten der Bauteiloberflächen eine zulässige Wechselfestigkeit von 206 MPa, 225 MPa bzw. sogar 244 MPa unter den für Schienenfahrzeuge geltenden Sicherheitsanforderungen aufweisen.

Werden die Radkörper jedoch aus hochfesten Aluminium-Knetlegierungen gefertigt, die über eine ausreichende Korrosionsfestigkeit verfügen, wie beispielsweise die unter der EN-Werkstoffnummer EN-AW 6082 oder unter der EN-Werkstoffnummer EN-AW 6110A gemäß DIN EN 13981-4 bekannten Aluminiumwerkstoffe, stehen allerdings nur Wechselfestigkeiten von typischerweise 35 bis 55 MPa zur Verfügung. Um dennoch eine dauerhaft sichere Verspannung der elastischen Körper zwischen dem aus Stahl bestehenden Radreifen und dem aus Leichtmetallwerkstoff geformten Radkörper zu ermöglichen, ist in der schon erwähnten WO 2018/046745 A1 ein Hybridrad vorgeschlagen worden, bei dem ein auf der Innenseite des Radkörpers eingeschrumpftes, eingepresstes oder klebgeschrumpftes Gegenlager aus einem höherfesten Material, insbesondere einem Stahl, vorgesehen ist, gegen das die Verspannung erfolgt. Ein derartiges Gegenlager kann auch für die Befestigung der Bremsscheibe oder Antriebskupplung mittels einer geeigneten Schraubbefestigung genutzt werden und erlaubt es, beispielsweise einem aus einer der voranstehend genannten Aluminium-Knetlegierungen bestehenden Radkörper die benötigten größeren Spannungsquerschnitte zu verleihen, so dass die im Gebrauch im Radkörper auftretenden zyklischen Spannungen im Zulässigkeitsbereich des eingesetzten Werkstoffs liegen.

Bei der praktischen Erprobung hat sich gezeigt, dass Hybridschienenräder trotz der voranstehend erläuterten Maßnahmen insbesondere im Bereich der Nabenöffnung ihres Radkörpers, die (bei einer Losradlagerung) die für die drehbare Lagerung des Rades auf dem jeweils zugeordneten Achszapfen benötigten Wälzlager aufnimmt einem unzulässigen Verschleiß unterliegen.

Vor diesem Hintergrund hat sich die Aufgabe ergeben, ein Schienenrad zu schaffen, das die an seine Verschleißbeständigkeit gestellten Anforderungen sicher erfüllt.

Darüber hinaus sollte ein Radsatz für ein Schienenfahrzeug, insbesondere für ein Niederflurfahrzeug angegeben werden, der eine optimierte Lebensdauer besitzt.

In Bezug auf das Schienenrad hat die Erfindung diese Aufgabe dadurch gelöst, dass ein solches Schienenrad mindestens die in Anspruch 1 angegebenen Merkmale aufweist.

In Bezug auf den Radsatz hat die Erfindung die voranstehend genannte Aufgabe dadurch gelöst, dass ein solcher Radsatz mit erfindungsgemäß gestalteten Schienenrädern bestückt ist.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes mehrteiliges Schienenrad hat demgemäß in Übereinstimmung mit dem eingangs erläuterten Stand der Technik einen Radreifen (vorzugsweise aus eine verschleißfesten Stahllegierung), einen aus einem Leichtmetallwerkstoff bestehenden Radkörper, der eine Nabenöffnung aufweist, in der eine Anlagefläche vorgesehen ist, an der im Gebrauch ein Außenring eines Wälzlagers abgestützt ist oder die im Gebrauch mit der Außenfläche einer Welle (z.B. eines Radsatzes) oder eines Wellenstummels (z.B. einer Einzelradaufhängung) verbunden ist, und einen zwischen dem Radreifen und dem Radkörper angeordneten elastischen Körper, über den der Radreifen elastisch an dem Radkörper abgestützt ist. Insbesondere bei einer Losradlagerung sind in der Nabenöffnung vorzugsweise wenigstens zwei Anlageflächen vorgesehen, an denen im Gebrauch die Außenringe von zwei Wälzlagern abgestützt sind. Für den Einsatz bei einem starren Radsatz reicht hingegen eine einzige Anlagefläche in der Nabenöffnung aus, um eine sichere Verbindung (insb. eine kraft- bzw. reibschlüssige Verbindung) zwischen der Anlagefläche und der Außenfläche einer Welle oder eines Wellenstummels zu erzeugen. Es kann vorgesehen sein, dass zwischen dem Radreifen und dem Radkörper zwei oder mehr elastische Körper angeordnet sind, über die der Radreifen elastisch an dem Radkörper abgestützt ist.

Erfindungsgemäß ist dabei zumindest die Anlagefläche in der Nabenöffnung des Radkörpers mit einer durch elektrochemisches Anodisieren erzeugten Oxidschicht belegt. Wenn zwei oder mehr Anlageflächen in der Nabenöffnung des Radkörpers vorgesehen sind, kann vorgesehen sein, dass alle Anlageflächen mit einer durch elektrochemisches Anodisieren erzeugten Oxidschicht belegt sind.

Ein Radsatz für ein Schienenfahrzeug umfasst gemäß der Erfindung zwei erfindungsgemäß ausgebildete Schienenräder, die mit ihrer Anlagefläche mit der Außenfläche einer Welle oder eines Wellenstummels verbunden sind. Bei der Verbindung handelt es sich vorzugsweise um eine kraftschlüssige bzw. reibschlüssige Verbindung, die beispielsweise durch Einpressen und/oder Aufschrumpfen erzeugt werden kann.

Bei dem Radsatz kann es sich beispielsweise um einen Radsatz für ein Niederflur-Schienenfahrzeug handeln. Ein Radsatz für ein Niederflur-Schienenfahrzeug umfasst gemäß der Erfindung eine Portalachse, die einen sich entlang einer Längsachse erstreckenden Achsmittelteil und zwei Achszapfen aufweist, von denen einer an einem ersten Endabschnitt des Achsmittelteils und ein zweiter an einem gegenüberliegend zum ersten Endabschnitt ausgebildeten zweiten Endabschnitt des Achsmittelteils sitzt, wobei die Achszapfen nach außen vom Achsmittelteil wegweisend ausgerichtet sind, sowie zwei erfindungsgemäß ausgebildete Schienenräder, die in Loslagerung auf den Achszapfen der Portalachse über jeweils mindestens ein Wälzlager drehbar gelagert sind, das mit einem Innenring auf dem jeweiligen Achszapfen sitzt und mit einer Umfangsfläche eines Außenrings an der Anlagefläche anliegt, die in der Nabenöffnung des Radkörpers des Schienenrads vorgesehen ist.

Die Erfindung geht hierbei von der Erkenntnis aus, dass bei einem Hybridrad, dessen Radkörper aus einem Leichtmetallwerkstoff besteht und das in Loslagerung an einer Achse eines Radsatzes für ein Schienenfahrzeug gelagert werden soll, zur Vermeidung von Interaktionen zwischen der Innenfläche der Nabenöffnung des Radkörpers und dem Lageraußenring der Wälzlager, über die die Schienenräder auf den Achszapfen des Radsatzes gelagert sind, zusätzliche Maßnahmen erforderlich sind. Diese bestehen erfindungsgemäß darin, dass die Nabenöffnung des Radkörpers, welche als Aufnahme für die insbesondere als Rollenlagerung ausgebildete Wälzlagerung dient, einer besonderen Oberflächenbehandlung, nämlich einer elektrochemischen Anodisierung, unterzogen wird.

Durch diese in der Fachsprache auch als "Eloxieren" bezeichnete Behandlung wird erfindungsgemäß zumindest an der einen Abschnitt der Innenfläche der Nabenöffnung des Radkörpers bildenden Anlagefläche, an der der Außenring des Wälzlagers im Gebrauch anliegt oder die im Gebrauch mit der Außenfläche einer Welle oder eines Wellenstummels verbunden ist, gezielt eine Oxidschicht erzeugt, deren Dicke und Dichtheit über die Dicke und Dichtheit der natürlichen Oxidschicht hinausgeht, die sich in Folge des Kontakts des Leichtmetallwerkstoffs des Radkörpers mit der Umgebungsatmosphäre auf natürliche Weise an der Oberfläche des Radkörpers bildet.

Überraschend hat sich hier gezeigt, dass schon diese künstlich, durch eine gezielte Behandlung erzwungene Oxidschicht ausreicht, um die Verschleiß- und Abriebfestigkeit der Anlagefläche so weit zu erhöhen, dass die an die Lebensdauer des Schienenrads gestellten Anforderungen sicher erreicht werden.

Hierzu trägt auch bei, dass die erfindungsgemäß vorgesehene Oxidschicht eine hohe Korrosionsbeständigkeit im Bereich des Kontakts zwischen dem aus Leichtmetall bestehenden Radkörper und dem in der Regel aus einem hierzu bekannten Wälzlagerstahl bestehenden Außenring des Wälzlagers bzw. dem Material der Außenfläche der Welle bzw. des Wellenstummels gewährleistet.

Ein weiterer Vorteil der erfindungsgemäß mindestens im Bereich der in der Lageröffnung des Radkörpers vorgesehenen Anlageflächen für das jeweilige Wälzlager bzw. für die Welle oder für den Wellenstummel vorgesehenen, durch elektrochemische Anodisierung erzeugten Oxidschicht besteht darin, dass die Oxidschicht als elektrisch isolierende Sperrschicht wirkt. Sie verhindert auf diese Weise einen unbeabsichtigten Stromfluss - beispielsweise vom Radkörper über die Radlagerung zum Achszapfen - und verhindert auf diese Weise sicher das Auftreten von Lagerschäden, die andernfalls durch Stromfluss ausgelöst werden könnten.

Typischerweise werden Schienenräder der erfindungsgemäßen Art - wenn diese bei einer Losradlagerung eingesetzt werden - über zwei Wälzlager, wie Rollenlager, auf den ihnen zugeordneten Achszapfen gelagert. In diesem für die Praxis wichtigen Fall sind demnach zwei Anlageflächen in der Lageröffnung vorhanden, die in der erfindungsgemäßen Weise mit einer durch elektrochemisches Anodisieren erzeugten Oxidschicht belegt sind.

Die Widerstandsfähigkeit eines erfindungsgemäßen Schienenrads kann bei Verwendung in einer Losradlagerung dadurch weiter verbessert werden, dass nicht nur die dem jeweiligen Wälzlager zugeordnete Anlagefläche in erfindungsgemäßer Weise mit einer Oxidschicht belegt ist, sondern wenn die Anlagefläche einen Abschnitt einer Innenfläche der Nabenöffnung des Radkörpers bildet und die Innenfläche der Nabenöffnung insgesamt mit der durch elektrochemisches Anodisieren erzeugten Oxidschicht belegt ist.

Dabei hat es sich als besonders vorteilhaft erwiesen, wenn der Radkörper auch an seiner freien Außenseite außerhalb der Nabenöffnung zumindest abschnittsweise mit der erfindungsgemäß durch elektrochemische Anodisierung gebildeten Oxidschicht belegt wird. Dies hat den Vorteil, dass auch an der der Witterung ausgesetzten Außenseite des Radkörpers eine hohe Korrosionsbeständigkeit und gleichzeitig eine erhöhte Widerstandsfähigkeit der Oberfläche gegen mechanischen Angriffe vorliegt, zu denen es im Gebrauch beispielsweise durch Schotterflug im Fahrbetrieb kommen kann. Die durch die erfindungsgemäß erzeugte Oxidschicht erreichte Widerstandsfähigkeit gegen Korrosion und mechanische Beschädigung ist dabei so hoch, dass auf zusätzliche Maßnahmen, wie Farbauftrag, verzichtet werden kann. Die im Stand der Technik bei farbbeschichteten Schienenrädern erforderlichen aufwändigen Inspektionen auf Unversehrtheit und die gegebenenfalls erforderlichen Instandsetzungsarbeiten können auf diese Weise auf ein Minimum reduziert werden.

Um die Vorteile der erfindungsgemäß vorgesehenen Oxidschicht möglichst umfassend zu nutzen, kann der Radkörper insgesamt mit der elektrochemisch erzeugten Oxidschicht belegt sein.

Zum Verspannen des elastischen Körpers zwischen dem Radreifen und dem Radkörper kann in an sich bekannter Weise (s. WO 2018/046745 A1) ein gegen den Radkörper verspanntes Spannmittel vorgesehen sein. Dieses ist typischerweise als Spannring ausgebildet, der an einem passenden Umfangsabsatz des Radkörpers sitzt.

Soll auch dem optional vorhandenen Spannelement eines erfindungsgemäßen Schienenrads eine optimierte Standfestigkeit und Korrosionsbeständigkeit verliehen werden, kann dies ebenfalls dadurch erreicht werden, dass das Spannelement zumindest abschnittsweise mit einer durch elektrochemische Anodisierung erzeugten Oxidschicht belegt wird. Hier erweist es sich als besonders zweckmäßig, wenn das Spannelement zumindest im Bereich seiner mit dem elastischen Körper in Kontakt kommenden Fläche mit einer durch elektrochemische Anodisierung erzeugten Oxidschicht belegt ist.

Im Fall, dass an der Außenfläche des Radkörpers und / oder des optional vorhandenen Spannelements eine Anschlusszone zum Anschluss einer elektrisch leitenden Kabelverbindung ("Strombrücke") vorgesehen ist, kann die Außenfläche des Radkörpers, des Radreifens und / oder des optional vorhandenen Spannelements mit Ausnahme der Anschlusszone mit der durch elektrochemisches Anodisieren erzeugten Oxidschicht belegt sein. Die jeweilige Anschlusszone sollte von der Oxidschicht ausgenommen werden, um in der betreffenden Anschlusszone einen minimierten elektrischen Übergangswiderstand zwischen dem angeschlossenen Kabel und dem jeweiligen Bauteil "Radkörper" oder "Spannelement" zu gewährleisten, an das die elektrisch leitende Kabelverbindung jeweils angeschlossen ist.

Verfahren zum gezielten elektrochemischen Anodisieren sind dem Fachmann hinlänglich bekannt. Im Fall, dass der Radkörper, wie von der Erfindung bevorzugt, aus einem Aluminiumwerkstoff besteht, gelingt es mit den bekannten Anodisierverfahren die natürlich vorhandene Oxidschicht um das 50- bis 5000-fache zu verstärken. Typischerweise beträgt die Dicke der so erzeugten, erfindungsgemäß vorgesehenen Oxidschicht 10 µm bis 160 µm, insbesondere 30 µm bis 140 µm.

Für die elektrochemische Erzeugung der erfindungsgemäß vorgesehenen Oxidschicht wird der zu behandelnde Radkörper in ein aus einer elektrisch leitenden Flüssigkeit, dem Elektrolyten, bestehendes Bad gesetzt und an eine Gleichspannungsquelle angeschlossen, so dass er im elektrochemischen Prozess als Anode dient. Typischerweise wird als Elektrolyt Schwefelsäure oder Oxalsäure verwendet. Zusätzlich wird in das Elektrolytbad eine beispielsweise stabförmige Kathode getaucht, die typischerweise aus nichtrostendem Stahl, Blei oder Aluminium besteht. Im so gebildeten Spannungsfeld entstehen unter Freisetzung von Wasserstoff an der Kathode sauerstoffhaltige Anionen, die sich zur Oberfläche des Radkörpers bewegen. Dort reagieren sie mit dem Aluminiumwerkstoff des Radkörpers, so dass eine fest auf den freien Flächen des Radkörpers haftende Aluminiumoxidschicht entsteht. Die so gebildete Oxidschicht umfasst eine dünne so genannte Sperrschicht, die fast porenfrei, vollständig dicht und elektrisch isolierend ist, und eine deutlich dickere, leicht poröse und elektrisch leitende Deckschicht, die sich durch eine chemische Reaktion der Sperrschicht mit dem Elektrolyten gebildet hat. Flächen des Radkörpers, die frei von der Oxidschicht bleiben sollen, können in bekannter Weise beispielsweise mittels eines hierzu aus dem Stand der Technik bekannten Lacks maskiert werden. Nähere Erläuterungen zu bekannten, für die erfindungsgemäßen Zwecke geeigneten Verfahren zur elektrochemischen Anodisierung eines Leichtmetallwerkstoffs finden sich in Galvanotechnik von Nasser Kanani; Hanser-Verlag, München; 3. Aufl. 2020.

Besonders vorteilhaft erweist sich die Erfindung, wenn der Radkörper eines erfindungsgemäßen Schienenrads aus einem Aluminiumwerkstoff, insbesondere einer Aluminiumknetlegierung der eingangs erwähnten Art besteht. Die durch elektrochemisches Anodisieren erzeugte Oxidschicht besteht bei dieser Ausgestaltung zu mindestens 87,1 Masse-% aus Al₂O₃ und als Rest aus anderen Oxiden, die im Zuge der elektrochemischen Anodisierung aus oxidbildenden Legierungsbestandteilen gebildet sind, die zusätzlich zu Aluminium in dem Aluminiumwerkstoff des Radkörpers enthalten sind. Dabei erweisen sich maximierte Al₂O₃-Gehalte mit Blick auf die Optimierung der Widerstandsfähigkeit als besonders vorteilhaft. Dementsprechend sieht eine vorteilhafte Ausgestaltung der Erfindung vor, dass die durch elektrochemisches Anodisieren erzeugte Oxidschicht zu mindestens 95,0 Masse-% aus Al₂O₃ besteht.

Ein erfindungsgemäßer Radsatz für ein Schienenfahrzeug umfasst zwei erfindungsgemäß ausgebildete Schienenräder, die vorzugsweise mit ihrer Anlagefläche mit der Außenfläche einer Welle verbunden sind bzw. eines einzelnen Rades welches mit einem Wellenstummel verbunden ist, beispielsweise durch eine kraft- bzw. reibschlüssige Verbindung.

Ein erfindungsgemäßer Radsatz für ein Niederflur-Schienenfahrzeug umfasst
- eine Portalachse, die einen sich entlang einer Längsachse erstreckenden Achsmittelteil und zwei Achszapfen aufweist, von denen einer an einem ersten Endabschnitt des Achsmittelteils und ein zweiter an einem gegenüberliegend zum ersten Endabschnitt ausgebildeten zweiten Endabschnitt des Achsmittelteils sitzt, wobei die Achszapfen nach außen vom Achsmittelteil wegweisend ausgerichtet sind,
   und
- zwei erfindungsgemäß ausgebildete Schienenräder, die in Loslagerung auf den Achszapfen der Portalachse über jeweils mindestens ein Wälzlager drehbar gelagert sind, das mit einem Innenring auf dem jeweiligen Achszapfen sitzt und mit einer Umfangsfläche eines Außenrings an der Anlagefläche anliegt, die in der Nabenöffnung des Radkörpers des Schienenrads vorgesehen ist, wobei in der Praxis typischerweise jeweils zwei Wälzlager für jedes der Schienenräder vorgesehen sind.

Nachfolgend wird die Erfindung anhand einer ein Ausführungsbeispiel darstellenden Zeichnung näher erläutert. Es zeigen jeweils schematisch:
- Fig. 1: ein an einem Endabschnitt einer Portalachse vorgesehenen Achszapfen gelagertes Schienenrad in einem Schnitt längs der in Fig. 2 eingezeichneten Schnittlinie A-A;
- Fig. 2: das Schienenrad in einer auf seine von der Portalachse abgewandten freien Stirnseite gerichteten frontalen Ansicht;
- Fig. 3: einen Radkörper des in den Figuren 1 und 2 gezeigten Schienenrads in einer der Fig. 1 entsprechenden Schnittdarstellung.

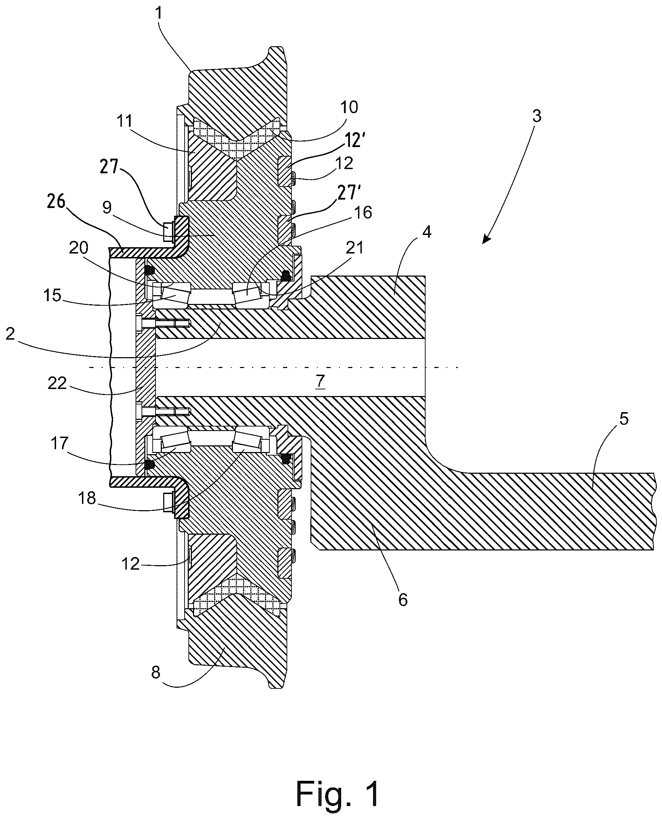

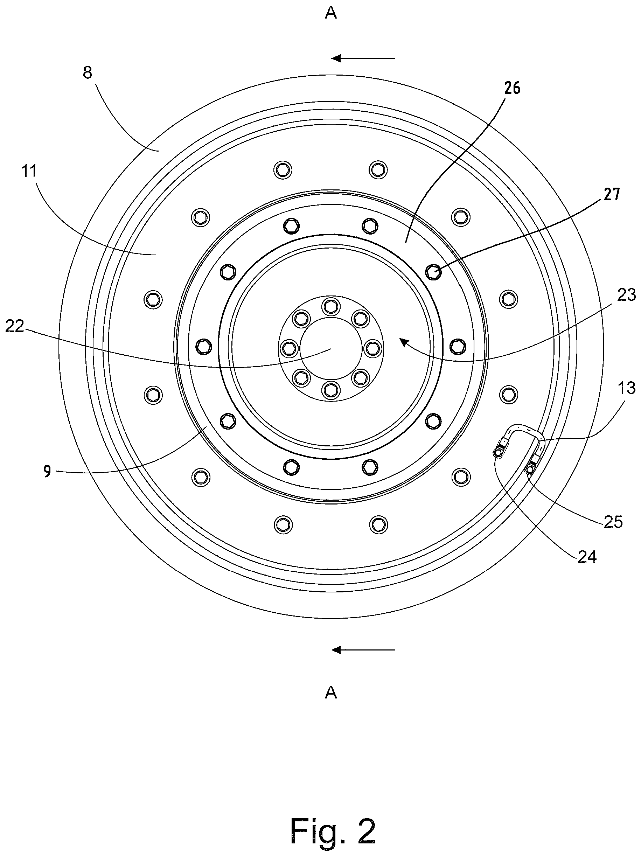

In den Figuren 1 und 2 ist ein Schienenrad 1 dargestellt, das auf einem Achszapfen 2 einer Portalachse 3 drehbar gelagert ist. Alternativ hierzu kann das Schienenrad 1 - nicht drehbar - mit einer Welle oder einem Wellenstumpf verbunden sein. Der Achszapfen 2 ist in einem Stück an eine Wange 4 angeformt, die wiederum in einem Stück an ein Achsmittelteil 5 der Portalachse 3 derart angeformt ist, dass die Wange 4 auf einem ihr zugeordneten Endabschnitt 6 des Achsmittelteils 5 steht und der Achszapfen 2 seitlich von dem Achsmittelteil 5 wegweisend von der Wange 4 getragen ist. In den Achszapfen 2 ist zur Minimierung des Gewichts der Portalachse 3 eine Durchgangsöffnung 7 eingebracht, die von der freien Stirnseite des Achszapfens 2 bis zur dem Achsmittelteil 5 zugeordneten Seitenfläche der Wange 4 führt.

Die Portalachse 3 umfasst eine in gleicher Weise ausgebildete zweite Anordnung von einer Wange und einem Achszapfen, auf dem ein entsprechend dem Schienenrad 1 ausgebildetes, hier nicht gezeigtes Schienenrad gelagert ist. Diese zweite Anordnung ist in Bezug auf die Mitte der Portalachse 3 spiegelsymmetrisch zur aus der Wange 4 und dem Achszapfen 2 mit dem Schienenrad 1 gebildeten Anordnung an einem hier ebenfalls nicht gezeigten Endabschnitt des Achsmittelteils 5 vorgesehen, der am dem ersten Endabschnitt 6 gegenüberliegenden Ende des Achsmittelteils 5 ausgebildet ist.

Das Schienenrad 1, die Portalachse 3 und das zweite an ihr gelagerte Schienenrad sind Teil eines Radsatzes, der in herkömmlicher Weise weitere Bauteile oder Einrichtungen aufweisen kann. Hierzu gehören beispielsweise eine Bremseinrichtung zum Bremsen der Schienenräder, eine Antriebseinrichtung zum Antrieb der Schienenräder und/oder ein FederDämpfer-System, über das der Radsatz in an sich bekannter Weise federnd elastisch an ein Fahrgestell eines Niederflurschienenfahrzeugs, wie einer Straßenbahn, angekoppelt sein kann. Diesbezüglich ist in Fig. 1 und Fig. 2 lediglich beispielhaft ein Verbindungelement 26 gezeigt, das zur Aufnahme einer Bremseinrichtung (insb. einer Bremsscheibe) oder einer Antriebseinrichtung bestimmt ist, und im Bereich einer Anschlusszone über Spannschrauben 27, die in Gegenlager 27' eingeschraubt sind, am Radkörper 9 befestigt ist.

Das hier exemplarisch für die Schienenräder des Radsatzes dargestellte Schienenrad 1 ist in aus dem eingangs dieses Textes erläuterten Stand der Technik bekannter Weise mehrteilig aus einem Radreifen 8, einem Radkörper 9 und in regelmäßigen Abständen zwischen dem Radreifen 8 und dem Radkörper 9 angeordneten elastischen Körpern 10 zusammengesetzt, über die der Radreifen 8 elastisch an dem Radkörper 9 abgestützt ist.

Zum Verspannen der elastischen Körper 10 zwischen dem Radreifen 8 und dem Radkörper 9 ist ein Spannring 11 vorgesehen, der in der beispielsweise in der WO 2018/046745 A1 beschriebenen Weise mittels Spannschrauben 12, die in Gegenlager 12' eingeschraubt sind, am Radkörper 9 befestigt ist.

Über die Spannschrauben 12 und die korrespondierenden Gegenlager 12' ist der Radkörper 9 elektrisch leitend an den Spannring 11 angebunden. Die elektrische Verbindung zwischen dem Radreifen 8 und dem Radkörper 9 ist in der beispielsweise in der WO 2020/234286 A1 beschriebenen Weise über eine Strombrücke 13 hergestellt, die mit dem an ihrem einen Ende vorgesehenen Kabelschuh in einer ersten Anschlusszone 25 an der von der Portalachse 3 abgewandten Stirnfläche des Radreifens 8 und mit dem an ihrem anderen Ende vorgesehenen Kabelschuh in einer zweiten Anschlusszone 24 an der freien Stirnfläche des Spannrings 11 anliegt. Alternativ hierzu kann die zweite Anschlusszone 24 des Kabelschuhs an der freien Stirnseite des Radkörpers 9 anliegen.

Der Radkörper 9 ist aus einem Aluminiumwerkstoff, wie beispielsweise aus der unter der EN-Werkstoffnummer EN-AW 6082 genormten Aluminiumknetlegierung, gefertigt und weist eine Nabenöffnung 14 auf, durch die der dem Schienenrad 1 zugeordnete Achszapfen 2 der Portalachse 3 geführt ist.

Auf dem Achszapfen 2 sitzen in bekannter Weise in einer Loslager-Anordnung zwei als Rollenlager ausgebildete Wälzlager 15,16, deren Außenringe 17,18 jeweils an einer an der Innenfläche 19 der Nabenöffnung 14 vorgesehenen Anlagefläche 20,21 anliegen. Die Anlageflächen 20,21 nehmen dabei jeweils einen Abschnitt der Innenfläche 19 der Nabenöffnung 14 ein. Über einen an die Stirnseite des Achszapfens 2 angeschraubten Deckel 22 ist die Position der Wälzlager 15,16 auf dem Achszapfen 2 gesichert.

Der aus dem Aluminiumwerkstoff bestehende Radkörper 9 ist vor dem Zusammenbau des Schienenrads 1 einer elektrochemischen Anodisierung unterzogen worden, die in der oben bereits erläuterten, an sich bekannten Weise durchgeführt worden ist. Durch die Anodisierung ist auf der gesamten Außenfläche 23 des Radkörpers 9, der Innenfläche 19 seiner Nabenöffnung 14 und insbesondere den Anlageflächen 20,21 eine 10 µm bis 160 µm dicke, zu mindestens 87,1 Masse-% aus Al₂O₃ bestehende Oxidschicht OX erzeugt worden.

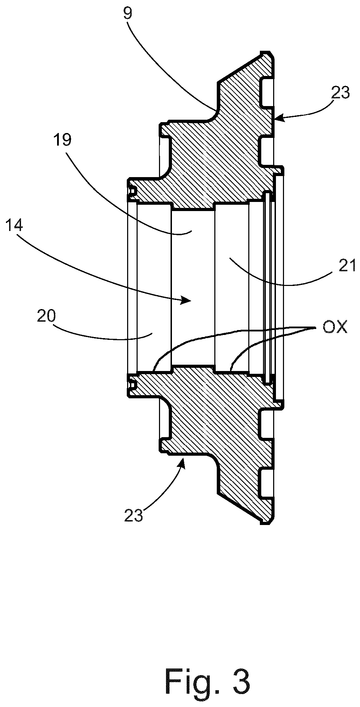

Wie in Fig. 3 durch die mit größerer Strichstärke wiedergegebene Umrisslinie des Radkörpers 9 angedeutet, bedeckt die Oxidschicht OX die Außenflächen 23 des Radkörpers 9 und die Innenfläche 19 seiner Innenöffnung 14 mit den Anlageflächen 20,21 im technischen Sinne vollständig dicht, bis auf Anschlussflächen für sogenannte Erdungskontakte, mit welchem die elektrische Verbindung zwischen den Fahrwerken des Schienenfahrzeugs und über die Strombrücken 13 mit den Radreifen 8 und damit mit der Schiene hergestellt werden. Als solche bildet die Oxidschicht OX nicht nur einen optimal widerstandsfähigen Schutz gegen Korrosion und abrasiven Verschleiß, sondern auch, insbesondere im Bereich der Anlagenflächen 20,21, eine elektrische Isolierung, durch die ein Stromfluss vom Achszapfen 2 über die Wälzlager 16,17 zum Radkörper 8 und umgekehrt unterbunden wird. Um einen optimalen elektrischen Übergang zwischen dem Spannring 11 und dem Radkörper 8 zu gewährleisten, können die Flächen, in denen es zum Kontakt zwischen den zum Halten des Spannrings 11 an dem Radkörper 9 vorgesehenen Spannschrauben und dem Radkörper 9 kommt, sowie die Anschlussstellen der Erdungskontakte am Radkörper 9 durch Auftrag eines hierfür aus dem Stand der Technik bekannten Abdeckmittels, wie eines geeigneten Lacks, abgedeckt werden, um dort die Entstehung der Oxidschicht OX zu vermeiden.

Optional kann auch der Spannring 11 zur Optimierung seiner Beständigkeit gegen mechanische Angriffe, wie beispielsweise Steinschlag, mit einer durch elektrochemische Anodisierung erzeugten Oxidschicht versehen sein. Hierzu wird der Spannring 11 vor dem Zusammenbau des Schienenrads 1 in an sich bekannter Weise elektrochemisch mit der Oxidschicht versehen. Vor der elektrochemischen Behandlung werden dabei die Anschlusszonen 24 am Spannring 11, in denen die Kabelschuhe der Strombrücke 13 an den Stirnflächen vom Spannring 11 anliegen, mit einem geeigneten Abdeckmittel, beispielsweise einem hierzu im Stand der Technik gebräuchlichen Lack, abgedeckt. Auf diese Weise werden die Anschlussflächen frei von der Oxidschicht gehalten und ein optimaler elektrischer Übergang zwischen der Strombrücke 13, dem Radreifen 8, dem Spannring 11 und damit einhergehend dem Radkörper 9 gewährleistet. Wenn alternativ hierzu die Anschlusszone 24 nicht am Spannring 11 sondern direkt am Radkörper 9 positioniert ist, erfolgt eine analoge Abdeckung dieser Zone zur Erreichung eines optimalen elektrischen Übergangs. In gleicher Weise wird auch verfahren bei den Anschlussstellen für die genannten Erdungskontakte am Radkörper.

### BEZUGSZEICHENLISTE

- 1: Schienenrad
- 2: Achszapfen
- 3: Portalachse
- 4: Wange der Portalachse 3
- 5: Achsmittelteil der Portalachse 3
- 6: Endabschnitt des Achsmittelteils der Portalachse 3
- 7: Durchgangsöffnung des Achszapfens 2
- 8: Radreifen
- 9: Radkörper
- 10: elastische Körper
- 11: Spannring
- 12: Spannschrauben
- 12':: Gegenlager (der Spannschraube 12)
- 13: Strombrücke
- 14: Nabenöffnung des Radkörpers 8
- 15,16: Wälzlager
- 17,18: Außenringe der Wälzlager 15,16
- 19: Innenfläche der Nabenöffnung 14
- 20,21: Anlageflächen für die Außenringe 17,18 der Wälzlager 15,16
- 22: Deckel
- 23: Außenfläche des Radkörpers 9
- 24,25: Anschlusszonen für die Strombrücke 13
- 26: Verbindungselement
- 27: Spannschraube
- 27': Gegenlager (der Spannschraube 27)
- OX: Oxidschicht

## Patentansprüche

1. Mehrteiliges Schienenrad mit einem Radreifen (8), mit einem aus einem Leichtmetallwerkstoff bestehenden Radkörper (9), der eine Nabenöffnung (14) aufweist, in der eine Anlagefläche (20,21) vorgesehen ist, an der im Gebrauch ein Außenring (17,18) eines Wälzlagers (15,16) abgestützt ist oder die im Gebrauch mit der Außenfläche einer Welle oder eines Wellenstummels verbunden ist, und mit mindestens einem zwischen dem Radreifen (8) und dem Radkörper (9) angeordneten elastischen Körper (10), über den der Radreifen (8) elastisch an dem Radkörper (9) abgestützt ist, **dadurch gekennzeichnet, dass** zumindest die Anlagefläche (20,21) in der Nabenöffnung (14) des Radkörpers (9) mit einer durch elektrochemisches Anodisieren erzeugten Oxidschicht (OX) belegt ist.

2. Schienenrad nach Anspruch 1, **dadurch gekennzeichnet, dass** die Anlagefläche (20,21) einen Abschnitt einer Innenfläche (19) der Nabenöffnung (14) des Radkörpers (9) bildet und **dass** die Innenfläche (19) der Nabenöffnung (14) insgesamt mit der durch elektrochemisches Anodisieren erzeugten Oxidschicht (OX) belegt ist.

3. Schienenrad nach einem der voranstehenden Ansprüche, **dadurch gekennzeichnet, dass** zumindest ein Abschnitt einer Außenfläche des Radkörpers (9) ebenfalls mit der durch elektrochemisches Anodisieren erzeugten Oxidschicht (OX) belegt ist.

4. Schienenrad nach einem der voranstehenden Ansprüche, **dadurch gekennzeichnet, dass** zum Verspannen des elastischen Körpers (10) zwischen dem Radreifen (8) und dem Radkörper (9) ein gegen den Radkörper (9) verspanntes Spannmittel (11) aus einem Leichtmetallwerkstoff vorgesehen ist.

5. Schienenrad nach Anspruch 4, **dadurch gekennzeichnet, dass** das Spannmittel (11) zumindest im Bereich seiner mit dem elastischen Körper in Kontakt kommenden Fläche mit einer durch elektrochemische Anodisierung erzeugten Oxidschicht (OX) belegt ist.

6. Schienenrad nach einem der Ansprüche 3 bis 5, **dadurch gekennzeichnet, dass** an der Außenfläche (23) des Radkörpers (9) und / oder der Außenfläche des Spannmittels (11) eine Anschlusszone (24) zum Anschluss einer elektrisch leitenden Kabelverbindung vorgesehen ist und **dass** die jeweilige Außenfläche mit Ausnahme der Anschlusszone (24) vollständig mit der durch elektrochemisches Anodisieren erzeugten Oxidschicht (OX) belegt ist.

7. Schienenrad nach einem der voranstehenden Ansprüche, **dadurch gekennzeichnet, dass** die Dicke der jeweils vorhandenen Oxidschicht (OX) 10 µm bis 160 µm beträgt.

8. Schienenrad nach einem der voranstehenden Ansprüche, **dadurch gekennzeichnet, dass** der Radkörper (9) aus einem Aluminiumwerkstoff besteht und die durch elektrochemisches Anodisieren erzeugte Oxidschicht (OX) zu mindestens 87,1 Masse-% aus Al₂O₃ und als Rest aus anderen Oxiden besteht, die im Zuge der elektrochemischen Anodisierung aus oxidbildenden Legierungsbestandteilen gebildet sind, die zusätzlich zu Aluminium in dem Aluminiumwerkstoff des Radkörpers (9) enthalten sind.

9. Radsatz für ein Schienenfahrzeug mit zwei gemäß einem der voranstehenden Ansprüche ausgebildeten Schienenrädern (1).

10. Radsatz nach Anspruch 9, **dadurch gekennzeichnet, dass** die Schienenräder (1) mit ihrer Anlagefläche (20,21) mit der Außenfläche einer Welle oder eines Wellenstummels verbunden sind.

11. Radsatz nach Anspruch 9 für ein Niederflur-Schienenfahrzeug mit einer Portalachse (3), die einen sich entlang einer Längsachse erstreckenden Achsmittelteil (5) und zwei Achszapfen (2) aufweist, von denen einer an einem ersten Endabschnitt (6) des Achsmittelteils (5) und ein zweiter an einem gegenüberliegend zum ersten Endabschnitt (6) ausgebildeten zweiten Endabschnitt des Achsmittelteils (5) sitzt, wobei die Achszapfen nach außen vom Achsmittelteil wegweisend ausgerichtet sind, und mit zwei gemäß einem der voranstehenden Ansprüche ausgebildeten Schienenrädern (1), die in Loslagerung auf den Achszapfen (2) der Portalachse (3) über jeweils mindestens ein Wälzlager (15,16) drehbar gelagert sind, das mit einem Innenring auf dem jeweiligen Achszapfen (2) sitzt und mit einer Umfangsfläche eines Außenrings (17,18) an der Anlagefläche (20,21) anliegt, die in der Nabenöffnung (14) des Radkörpers (9) des Schienenrads (1) vorgesehen ist.

12. Radsatz nach Anspruch 11, **dadurch gekennzeichnet, dass** die Schienenräder (1) jeweils mittels zweier Wälzlager (15,16) auf dem ihnen zugeordneten Achszapfen (2) der Portalachse (3) drehbar gelagert sind und **dass** jedem Wälzlager (15,16) eine Anlagefläche (20,21) in der Nabenöffnung (14) des Radkörpers (9) der Schienenräder (1) zugeordnet ist.

## Claims

1. Multi-part rail wheel having a wheel tyre (8), having a wheel body (9) which consists of a light alloy material and has a hub opening (14) in which a contact surface (20, 21) is provided, on which an outer ring (17, 18) of a roller bearing (15, 16) is supported during use or which is connected to the outer surface of a shaft or a shaft stub during use, and having at least one resilient body (10) which is arranged between the wheel tyre (8) and the wheel body (9) and via which the wheel tyre (8) is resiliently supported on the wheel body (9), **characterised in that** at least the contact surface (20, 21) in the hub opening (14) of the wheel body (9) is covered with an oxide layer (OX) generated by electrochemical anodizing.

2. Rail wheel according to Claim 1, **characterised in that** the contact surface (20, 21) forms a section of an inner surface (19) of the hub opening (14) of the wheel body (9) and **in that** the inner surface (19) of the hub opening (14) is covered entirely with the oxide layer (OX) generated by electrochemical anodizing.

3. Rail wheel according to one of the preceding claims, **characterised in that** at least a section of an outer surface of the wheel body (9) is also covered with the oxide layer (OX) generated by electrochemical anodizing.

4. Rail wheel according to one of the preceding claims, **characterised in that** a clamping means (11), which consists of a light alloy material and is clamped against the wheel body (9), is provided in order to clamp the resilient body (10) between the wheel tyre (8) and the wheel body (9).

5. Rail wheel according to Claim 4, **characterised in that** the clamping means (11) is covered with an oxide layer (OX) generated by electrochemical anodizing at least in the region of its surface that comes in contact with the resilient body.

6. Rail wheel according to one of Claims 3 to 5, **characterised in that** a connecting zone (24) for connecting an electrically conductive cable connection is provided on the outer surface (23) of the wheel body (9) and/or the outer surface of the clamping means (11) and **in that** the respective outer surface with the exception of the connecting zone (24) is fully covered with the oxide layer (OX) generated by electrochemical anodizing.

7. Rail wheel according to one of the preceding claims, **characterised in that** the thickness of the oxide layer (OX) respectively present is from 10 µm to 160 µm.

8. Rail wheel according to one of the preceding claims, **characterised in that** the wheel body (9) consists of an aluminium material and the oxide layer (OX) generated by electrochemical anodizing consists of at least 87.1% by mass Al₂O₃ and a remainder of other oxides, which are formed in the course of electrochemical anodizing from oxide-forming alloy constituents that are contained in addition to aluminium in the aluminium material of the wheel body (9).

9. Wheel set for a rail vehicle, having two rail wheels (1) formed according to one of the preceding claims.

10. Wheel set according to Claim 9, **characterised in that** the rail wheels (1) are connected with their contact surface (20, 21) to the outer surface of a shaft or a shaft stub.

11. Wheel set according to Claim 9 for a low-floor rail vehicle, having a portal axle (3), having an axle middle part (5) extending along a longitudinal axis and two axle journals (2), one of which is seated on a first end section (6) of the axle middle part (5) and a second of which is seated on a second end section of the axle middle part (5), which is formed opposite to the first end section (6), the axle journals being aligned facing outwards from the axle middle part, and having two rail wheels (1) formed according to one of the preceding claims, which are rotatably mounted in floating bearing on the axle journal (2) of the portal axle (3) in each case via at least one roller bearing (15, 16) which is seated with an inner ring on the respective axle journal (2) and bears with a circumferential surface of an outer ring (17, 18) on the contact surface (20, 21), which is provided in the hub opening (14) of the wheel body (9) of the rail wheel (1).

12. Wheel set according to Claim 11, **characterised in that** the rail wheels (1) are in each case rotatably mounted on their assigned axle journal (2) of the portal axle (3) by means of two roller bearings (15, 16) and **in that** a contact surface (20, 21) in the hub opening (14) of the wheel body (9) of the rail wheels (1) is assigned to each roller bearing (15, 16).

## Revendications

1. Roue ferroviaire à plusieurs parties comprenant un bandage de roue (8), un corps de roue (9) qui est constitué d'un matériau métallique léger et qui présente une ouverture de moyeu (14) dans laquelle une surface d'appui (20, 21) est prévue, sur laquelle, lors de l'utilisation, une bague extérieure (17, 18) d'un palier de roulement (15, 16) est supportée ou qui, lors de l'utilisation, est reliée à la surface extérieure d'un arbre ou d'un arbre tronqué, ladite roue ferroviaire comprenant également au moins un corps élastique (10) qui est agencé entre le bandage de roue (8) et le corps de roue (9) et au moyen duquel le bandage de roue (8) est supporté élastiquement sur le corps de roue (9), **caractérisée en ce qu'**au moins la surface d'appui (20, 21) dans l'ouverture de moyeu (14) du corps de roue (9) est recouverte d'une couche d'oxyde (OX) électriquement isolante produite par anodisation électrochimique.

2. Roue ferroviaire selon la revendication 1, **caractérisée en ce que** la surface d'appui (20, 21) forme une section d'une surface intérieure (19) de l'ouverture de moyeu (14) du corps de roue (9) et **en ce que** la surface intérieure (19) de l'ouverture de moyeu (14) est entièrement recouverte de la couche d'oxyde (OX) produite par anodisation électrochimique.

3. Roue ferroviaire selon l'une quelconque des revendications précédentes, **caractérisée en ce qu'**au moins une section d'une surface extérieure du corps de roue (9) est également recouverte de la couche d'oxyde (OX) produite par anodisation électrochimique.

4. Roue ferroviaire selon l'une quelconque des revendications précédentes, **caractérisée en ce qu'**un moyen de serrage (11), constitué d'un matériau métallique léger et serré contre le corps de roue (9), est prévu pour tendre le corps élastique (10) entre le bandage de roue (8) et le corps de roue (9).

5. Roue ferroviaire selon la revendication 4, **caractérisée en ce que** le moyen de serrage (11) est recouvert d'une couche d'oxyde (OX) produite par anodisation électrochimique au moins dans la zone de sa surface entrant en contact avec le corps élastique.

6. Roue ferroviaire selon l'une quelconque des revendications 3 à 5, **caractérisée en ce qu'**une zone de raccordement (24) destinée au branchement d'une connexion câblée électriquement conductrice est prévue sur la surface extérieure (23) du corps de roue (9) et/ou sur la surface extérieure du moyen de serrage (11) et **en ce que** la surface extérieure respective, à l'exception de la zone de raccordement (24), est entièrement recouverte de la couche d'oxyde (OX) produite par anodisation électrochimique.

7. Roue ferroviaire selon l'une quelconque des revendications précédentes, **caractérisée en ce que** l'épaisseur de chaque couche d'oxyde (OX) présente est comprise entre 10 µm et 160 µm.

8. Roue ferroviaire selon l'une quelconque des revendications précédentes, **caractérisée en ce que** le corps de roue (9) est constitué d'un matériau en aluminium et que la couche d'oxyde (OX) produite par anodisation électrochimique est constituée d'au moins 87,1 % en masse d'Al₂O₃, le reste étant constitué d'autres oxydes formés, au cours de l'anodisation électrochimique, à partir d'éléments d'alliage générateurs d'oxydes présents, en plus de l'aluminium, dans le matériau en aluminium du corps de roue (9).

9. Train de roues pour un véhicule ferroviaire comportant deux roues ferroviaires (1) conçues selon l'une quelconque des revendications précédentes.

10. Train de roues selon la revendication 9, **caractérisé en ce que** les roues ferroviaires (1) sont reliées, par leur surface d'appui (20, 21), à la surface extérieure d'un arbre ou d'un arbre tronqué.

11. Train de roues selon la revendication 9 pour un véhicule ferroviaire à plancher surbaissé avec un essieu portique (3) présentant une partie centrale d'essieu (5) s'étendant le long d'un axe longitudinal et deux tourillons (2), dont l'un se trouve sur une première section d'extrémité (6) de la partie centrale d'essieu (5) et l'autre sur une deuxième section d'extrémité, opposée à ladite première section d'extrémité (6), de la partie centrale d'essieu (5), les tourillons étant orientés vers l'extérieur en direction de la partie centrale d'essieu, et comprenant deux roues ferroviaires (1) conçues selon l'une des revendications précédentes, qui sont logées de manière à pouvoir tourner en palier libre sur le tourillon (2) de l'essieu portique (3) au moyen d'au moins un palier de roulement (15, 16) qui repose avec une bague intérieure sur le tourillon (2) respectif et avec une surface circonférentielle d'une bague extérieure (17, 18) sur la surface d'appui (20, 21) prévue dans l'ouverture de moyeu (14) du corps de roue (9) de la roue ferroviaire (1).

12. Train de roues selon la revendication 11, **caractérisé en ce que** les roues ferroviaires (1) sont respectivement montées de manière à pouvoir tourner, au moyen de deux paliers à roulement (15, 16), sur le tourillon (2) de l'essieu portique (3) qui leur est associé et **en ce qu'**une surface d'appui (20, 21) est associée à chaque palier à roulement (15, 16) dans l'ouverture de moyeu (14) du corps de roue (9) des roues ferroviaires (1).
